# EUROPEAN PATENT APPLICATION

(11) **EP 3 832 409 A1**
(43) Date of publication of application: **09.06.2021**
(21) Application number: 19213504.4
(22) Date of filing: 04.12.2019
(51) Int. Cl.: G05B 19/042, H05B 47/155, H05B 47/18

(54) **MODULAR CONTROLLER OF A BUILDING AUTOMATION SYSTEM**

(71) Applicant: Helvar Oy Ab, 02150 Espoo (FI)
(72) Inventor: Fielding, Simon, Bexleyheath, Greater London DA7 4PF (GB)
(74) Representative: Papula Oy

(57) **Abstract**

A base unit for a controller device of a building automation system comprises a mechanical interface (302) for attaching to a common mechanical support (105, 301), and an extension unit interface (110, 401). As parts of said extension unit interface (110, 401) are a power bus connector (402), a first communications bus connector (403), and a second communications bus connector (404). A power supply (207, 405) is coupled to said power bus connector (402) and configured to deliver electric power on a power bus (107) through said power bus connector (402). A first communications bus controller (406) is coupled to said first communications bus connector (403) and configured to set up and maintain communications on a first communications bus (108). A second communications bus controller (407) is coupled to said second communications bus connector (404) and configured to set up and maintain communications on a second communications bus (109) through said second communications bus connector (404).

## Description

### FIELD OF THE INVENTION

The invention is generally related to controller devices that are used to control one or more aspects of a building automation system, such as lighting, heating, ventilation, air conditioning, or the like. In particular the invention is related to modular controller devices that can be assembled from component devices to provide tailored control in a building or a part thereof.

### BACKGROUND OF THE INVENTION

It is customary to implement at least a part of the control functions of a building automation system in a centralized controller device that is located in an electricity cabinet or a utility services room. A lighting controller can be considered as an example. A commonly used lighting control architecture includes a centralized router or controller device that constitutes a control interface for the operator and houses all programmable features of lighting control. The router has one or more control network interfaces, such as DALI subnet interfaces (Digital Addressable Lighting Interface), through which it communicates with the lighting devices by exchanging commands, sensor messages, diagnostic information and the like. The designation "control network interface" is used because controlling some aspects of the operation of a building automation system takes place through some kind of a control network, like a DALI subnet for example.

An essential challenge in designing a controller device of this kind arises from the vastly varying requirements placed by different application environments. For example a conventional DALI subnet can include a maximum of 64 devices, so depending on the size of the installation the controller device should comprise one, two, or more DALI subnet interfaces. Some building automation systems may comprise several kinds of control networks in parallel like DA-LI, sDIM, and/or DMX for lighting; Modbus for sensor data; BACnet and/or KNX for general purpose building automation control; and/or others. There are several versions and generations of many of these; for example the basic DALI and its further developed version DA-LI2. For the ease of reference the basic names like DALI, sDIM, DMX, Modbus, BACnet, KNX, and others are used in this text in a general sense so that each of them covers all possible versions, generations, and/or other modifications of the respective basic standard.

A brute force approach might involve building a controller device that included a large number of interfaces already to begin with, but that would lead to large waste of resources and prohibitively high manufacturing cost. Another possibility would be to produce dedicated controller device models for all possible combinations of control needs, but that would result in difficulties in making supply meet demand in any reasonable way. A more plausible approach is to provide a modular controller device that includes a base unit with some basic connectivity and a number of optional extension units, each of which adds one or more additional control network interfaces to the base unit. When suitable modules are available, the designer of a building automation system may assemble an optimal controller device for each project according to need. The modular system may even be flexible enough to allow making later changes by adding and/or removing modules, for example when an older building automation subsystem is replaced with a new one or an extension part is added to the controlled part of the building.

The modular approach requires solving some practical problems regarding factors such as reliability, distribution of operating power, and organized communications between modules. In an optimal case adding and removing modules should be a plug-and-play kind of an operation, so that the system would automatically adapt itself to all changes in configuration. Another highly desirable feature is automatic recovery from malfunctions, for example so that if one of the modules becomes faulty it does not affect the appropriate operation of the rest of the system.

### SUMMARY

An objective of the invention is to present a modular controller device of a building automation system that allows flexible adding and removing of modules. Another objective of the invention is to present a modular controller device that ensures reliable communications between modules. A further objective of the invention is to present a modular controller device that is tolerant of malfunctions in individual modules and capable of feasible operation despite such malfunctions. A yet another objective of the invention is to make the modular controller device compatible with commonly used and standardized mechanical interfaces used for installation.

The objectives of the invention are achieved by building the modular controller device from units that attach to a common support structure, make electric connections to each other upon attaching, and communicate through two separate buses.

According to an aspect there is provided a base unit for a controller device of a building automation system. The base unit comprises a mechanical interface for attaching to a common mechanical support of the controller device, and an extension unit interface for receiving an extension unit of the controller device into contact with the base unit. As parts of said extension unit interface the base unit comprises a power bus connector, a first communications bus connector, and a second communications bus connector. The base unit comprises also a power supply coupled to said power bus connector and configured to deliver electric power to one or more extension units on a power bus through said power bus connector. The base unit comprises a first communications bus controller coupled to said first communications bus connector and configured to set up and maintain communications with one or more extension units on a first communications bus through said first communications bus connector. The base unit comprises a second communications bus controller coupled to said second communications bus connector and configured to set up and maintain communications with one or more extension units on a second communications bus through said second communications bus connector.

According to an embodiment said mechanical interface comprises a DIN rail slot at a bottom surface of the base unit, said extension unit interface comprises a side surface perpendicular to said bottom surface, and said power bus connector, first communications bus connector, and second communications bus connector are located on said side surface. This involves the advantage that the modular controller unit can be easily assembled into a configuration that obeys certain standards and conventions.

According to an embodiment at least one of said power bus connector, first communications bus connector, and second communications bus connector is implemented with a set of spring-loaded pieces of conductive material protruding out of said side surface. This involves the advantage that electric connections between the base unit and the extension unit are easily made as a part of assembling the modular controller device.

According to an embodiment the base unit is configured to respond to a detection of a connected extension unit by interrogating for a device identifier through said first communications bus. This involves the advantage that communications between the base unit and extension unit can be initiated in a safe and organized manner.

According to an embodiment the base unit is configured to transmit reconfiguration data to a connected extension unit, said reconfiguration data being transmitted through said first communications bus. This involves the advantage that the base unit can organize the operation of the modular controller device in a safe and robust manner.

According to an embodiment the base unit is configured to read out configuration data from a connected extension unit, said configuration data being read out through said first communications bus. This involves the advantage that the base unit can actively ensure that the extension unit is properly configured for operation.

According to an embodiment the base unit is configured to respond to the completion of a predefined exchange of information through said first communications bus by instructing the extension unit with which said predefined exchange of information took place to power up; to monitor an increase of power consumption on said power bus resulting from the instructed powering up of the extension unit; and to instruct the extension unit to either continue operating or power down, depending on whether said monitoring showed said increase of power consumption to be within or out of a predefined allowable power range respectively. This involves the advantage that the base unit maintains full control over the operation of the modular controller device even in case one or more of the extension units are malfunctioning.

According to an embodiment said base unit is configured to communicate with the extension unit through the second communications bus after instructing the extension unit to continue operating. This involves the advantage that extended communications capabilities can be employed while saving the first communications bus for the most critical exchanging of information.

According to another aspect there is provided an extension unit for a controller device of a building automation system. The extension unit comprises a mechanical interface for attaching to a common mechanical support of the controller device, a first interface for receiving a base unit or another extension unit of the controller device into contact with the extension unit, and a second interface for receiving a base unit or another extension unit of the controller device into contact with the extension unit. As parts of said first and second interfaces respectively the extension unit comprises first and second power bus connectors, connected to each other; first and second first communications bus connectors, connected to each other; and first and second second communications bus connectors, connected to each other. The extension unit comprises also a controllable power switch coupled to said power bus connectors and configured to controllably allow or disallow the extension unit to draw electric power from a power bus through one of said power bus connectors. The extension unit comprises also a first communications unit coupled to said first communications bus connectors, and configured to set up and maintain communications with a base unit on a first communications bus through one of said first communications bus connectors. The extension unit comprises also a control network interface for setting up and maintaining communications with external devices of said building automation system. The extension unit comprises also a second communications unit coupled to said second communications bus connectors and configured to set up and maintain communications between a base unit and said control network interface on a second communications bus through one of said second communications bus connectors.

According to an embodiment said mechanical interface of the extension unit comprises a DIN rail slot at a bottom surface of the extension unit, said first interface comprises a first side surface perpendicular to said bottom surface, and said second interface comprises a second side surface perpendicular to said bottom surface and parallel with the first side surface. Further according to said embodiment said first connector of the power bus, first connector of the first communications bus, and first connector of the second communications bus are located on said first side surface; and said second connector of the power bus, second connector of the first communications bus, and second connector for the second communications bus are located on said second side surface. This involves the advantage that the modular controller unit can be easily assembled into a configuration that obeys certain standards and conventions.

According to an embodiment at least one of said first and second power bus connectors, first and second first communications bus connectors, and first and second second communications bus connectors is implemented with a set of spring-loaded pieces of conductive material protruding out of the respective side surface. This involves the advantage that electric connections between the base unit and the extension unit, as well as between adjacent extension units, are easily made as a part of assembling the modular controller device.

According to an embodiment said first communications unit of the extension unit is coupled to a control input of said controllable power switch to make the first communications unit control the state of the controllable power switch. This involves the advantage that communications through the first communications bus can be utilized in deciding about the state of conductivity of the power switch.

According to a further aspect there is provided a controller device for a building automation system, comprising at least one base unit of the kind described above and at least one extension unit of the kind described above.

According to a further aspect there is provided a method for operating a controller device of a building automation system. The method comprises:
- detecting the coupling of an extension unit to a base unit of the controller device,
- setting up communications between the base unit and the extension unit through a first communications bus,
- as a response to the completion of a predefined exchange of information through said first communications bus, instructing the extension unit with which said predefined exchange of information took place to power up,
- monitoring an increase of power consumption on a power bus resulting from the instructed powering up of the extension unit, and
- instructing the extension unit to either continue operating or power down, depending on whether said monitoring showed said increase of power consumption to be within or out of a predefined allowable power range respectively.

According to an embodiment the method comprises making the base unit communicate with the extension unit through a second communications bus, different from said first communications bus, after instructing the extension unit to continue operating. This involves the advantage that extended communications capabilities can be employed while saving the first communications bus for the most critical exchanging of information.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a modular controller device,
**figure 2** illustrates a modular controller device,
**figure 3** illustrates a base unit of a modular controller device,
**figure 4** illustrates functional blocks of a base unit,
**figure 5** illustrates an extension unit of a modular controller device,
**figure 6** illustrates functional blocks of an extension unit,
**figure 7** illustrates a method,
**figure 8** illustrates an example of power distribution,
**figure 9** illustrates an example of an interface arrangement,
**figure 10** illustrates another example of an interface arrangement, and
**figure 11** illustrates yet another example of an interface arrangement.

### DETAILED DESCRIPTION

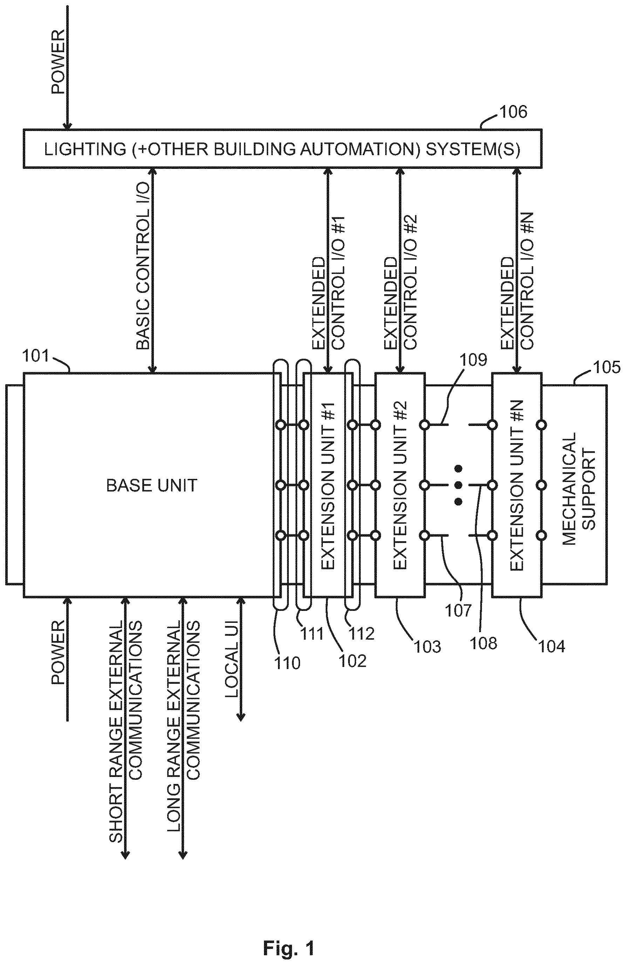

Fig. 1 illustrates an example of a controller device of a building automation system. Block 106 at the top of the drawing represents one or more controlled building automation systems that may comprise for example a centrally controlled lighting system that includes devices like controllable luminaires, user-actuatable switches, autonomous sensors, and/or the like. For the purposes of the following description the nature and content of the building automation system(s) have little importance; it is sufficient to assume that control signals according to at least one control protocol are to be exchanged between the controller device on one hand and the devices of the building automation system(s) on the other hand.

The controller device shown in fig. 1 has a modular structure, so that there is a base unit 101 and one or more extension units. Three extension units 102, 103, and 104 are shown in fig. 1 as examples. A common mechanical support 105 of the controller device offers mechanical support for both the base unit 101 and the extension units 102, 103, and 104. The common mechanical support 105 may comprise for example a so-called DIN rail, which is standardized in IEC/EN 60715. Other possibilities exist: the common mechanical support 105 may be for example a casing (or a part of a casing) that encloses the controller device. Both the base unit 101 and the extension units 102, 103, and 104 each have a mechanical interface for attaching to the common support 105. If the common support 105 is a DIN rail, the mechanical interface may comprise a DIN rail slot at a bottom surface of the respective base unit or extension unit.

The base unit 101 comprises an extension unit interface 110 for receiving an extension unit of the controller device into contact with the base unit 101. In the example of fig. 1 the first extension unit 102 comes into contact with the extension unit interface 110 of the base unit 101. The interface of the first extension unit 102 that comes against the extension unit interface 110 of the base unit 101 is marked as 111. Each of the extension units 102, 103, and 104 comprise a further extension unit interface (see 112 in fig. 1) for receiving a further extension unit of the controller device into contact therewith, so that in the modular structure of the controller device the extension units 102, 103, and 104 may build a line or stack that extends outwards from the extension unit interface 110 of the base unit 101.

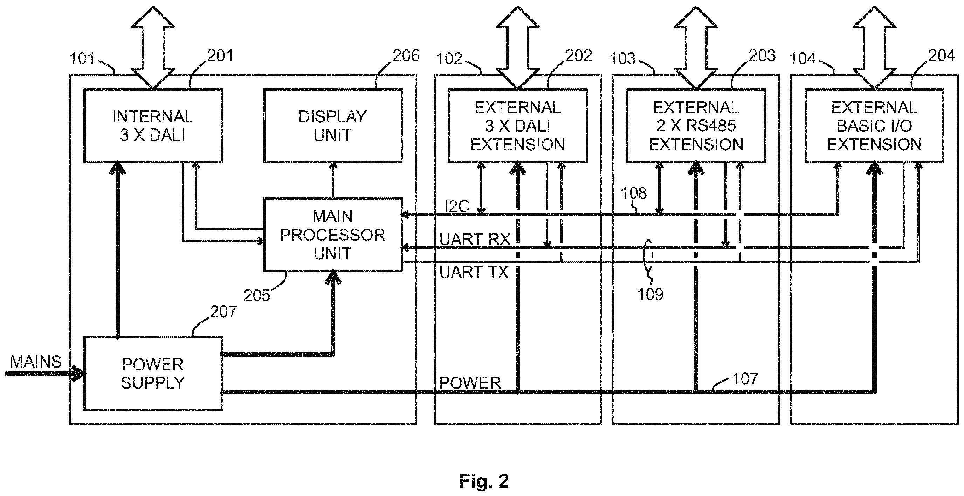

Fig. 2 illustrates some more functional aspects of a modular controller device of a building automation system. The basic division into a base unit 101 and one or more extension units 102, 103, and 104 is seen also in fig. 2. The idea is that the base unit 101 comprises a set of control functionalities that can be assumed to be needed in a large variety of different applications, and more functionalities are added to the controller device in the form of the appropriately selected extension units according to need. For example, there may be a certain relatively limited set of control network interfaces built into the base unit 101, like the set of three DALI subnet interfaces shown as 201 in fig. 2. The corresponding functionality is shown as the basic control I/O in fig. 1. As such, it is not obligatory to have any control network interfaces at all in the base unit; it is possible to provide all control network interfaces in extension units.

The controller device of fig. 2 is assumed to control also up to three more DALI subnets through the additional DALI subnet interfaces 202 in the first extension unit 102, corresponding to the first extended control I/O in fig. 1. Additionally the controller device of fig. 2 comprises two RS485-formed control network interfaces 203 as a part of the second extension unit 103 (corresponding to the second extended control I/O in fig. 1), and a basic I/O type control network interface as a part of the third extension unit 104 (corresponding to the third extended control I/O in fig. 1).

Three buses link the base unit 101 and the extension units 102, 103, and 104 to each other. There is a power bus 107, as well as a first communications bus 108 and a second communications bus 109. The power bus 107 is used to deliver electric power from the base unit 101 to the extension units 102, 103, and 104. The first and second communications buses 108 and 109 are used to set up and maintain communications between the base unit 101 and the extension units 102, 103, and 104. The first communications bus 108 is shown as an I2C bus, and the second communications bus 109 is shown as a UART bus in fig. 2. These are naturally just examples, and other bus technologies could be used instead. The reason for using two communications buses is described in more detail later.

Functionalities that in fig. 2 are shown as implemented in the base unit 101 comprise also a main processor unit 205, a display unit 206, and a power supply 207. Of these, the display unit 206 may be part of what is shown as a local UI in fig. 1. The power supply 207 represents functionalities that are used to convert mains electric power received from outside into distributable electric power at voltage levels and current amounts that are suitable for operating the various parts of the controller device. Examples of these are given later in this text.

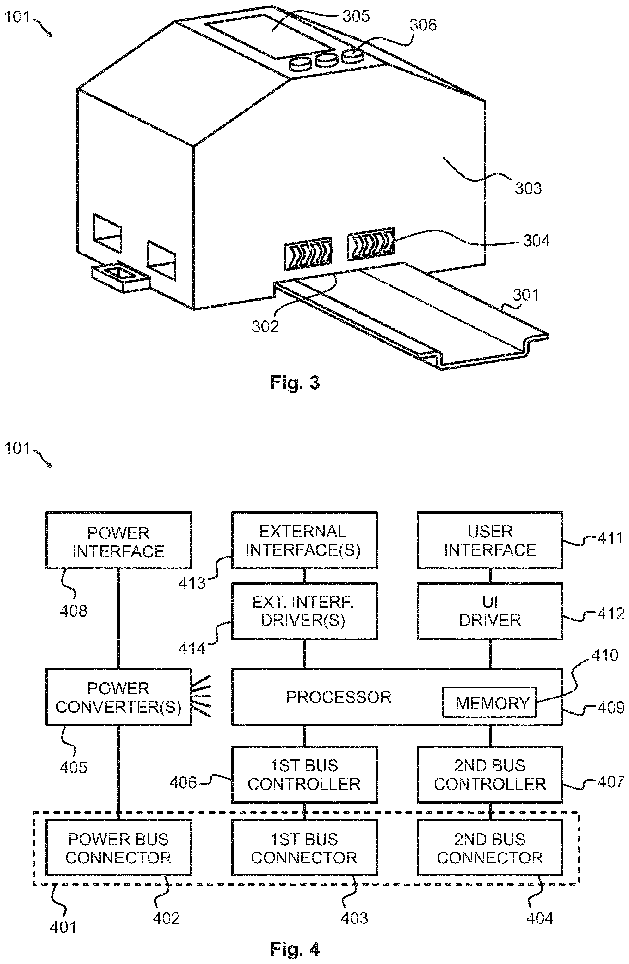

Fig. 3 shows an example of a base unit 101 attached to a DIN rail 301 that can be used to provide the common mechanical support of the controller device. The standard-conforming DIN rail slot 302 at the bottom surface of the base unit 101 is a part of the mechanical interface for attaching the base unit 101 to the common mechanical support.

In the embodiment of fig. 3 the extension unit interface of the base unit 101 comprises a side surface 303 that is perpendicular to the bottom surface. An extension unit (not shown in fig. 3) can be mechanically attached to the same DIN rail 301 so that it comes right next to the side surface 303. If there are electrical connector parts located on the side surface 303, they can make contact with respective connector parts on a corresponding surface of the extension unit when such an extension unit is attached. Fig. 3 shows how such connector parts can be implemented for example with a set of spring-loaded pieces of conductive material 304 protruding out of the side surface 303.

The use of a DIN rail 301 as the common mechanical support of the controller device may result in an installation geometry in which the top surface, i.e. the surface opposite to the bottom surface with the DIN rail slot 302, is most easily visible and accessible. Thus if any of the base and extension units comprises user interface features that are to be accessible in the installed device, it is advantageous to place these on the top surface. In fig. 3 the display 305 and a set of keys 306 are examples of such user interface features. Other types of components that could be used as user interface features in similar fashion include but are not limited to e.g. touch-pads, touch-sensitive displays, indicator lights, switches, sliders, knobs, and the like.

Fig. 4 illustrates an example of certain functional features of a base unit 101. Reference designator 401 illustrates functional features of an extension unit interface. As parts of the extension unit interface 401 the base unit of fig. 4 comprises a power bus connector 402, a first communications bus connector 403, and a second communications bus connector 404. A power supply 405, labeled in fig. 4 as comprising one or more power converters, is coupled to the power bus connector 402 and configured to deliver electric power to one or more extension units 102, 103, 104 (see figs. 1 and 2) on a power bus 107 through the power bus connector 402. One or more power converters in the power supply 405 may be configured to produce the operating voltages for the internal parts of the base unit 101. The electric energy that constitutes the power input of the power supply 405 comes from a power interface 408, to which may be connected for example a power cord inside a cabinet in which the DIN rail is installed (if the DIN-rail based mechanical structure is employed).

Further according to fig. 4 the base unit 101 comprises a first communications bus controller 406 that is coupled to the first communications bus connector 403. The first communications bus controller 406 is configured to set up and maintain communications with one or more extension units 102, 103, 104 (see figs. 1 and 2) on a first communications bus 108 through the first communications bus connector 403. Correspondingly, the base unit 101 comprises a second communications bus controller 407 that is coupled to the second communications bus connector 404 and configured to set up and maintain communications with one or more extension units 102, 103, 104 on a second communications bus 109 through the second communications bus connector 404.

The first and second communications bus controllers 406 and 407 operate under the control of a main processor unit 409, which is the main programmable part of the controller device. The processor unit comprises and/or has at its disposal sufficient memory 410 for storing the computer programs and data that enable its operation. The main processor unit 409 may arrange the operation of the user interface 411, possibly through one or more user interface drivers 412. The main processor unit 409 may also set up and maintain external communications through one or more external communications interfaces 413, possibly equipped with the corresponding drivers 414. Examples of external communications interfaces 413 include but are not limited to an USB or other interface intended for local short-distance wired communications; an Ethernet or other interface intended for long-distance wired communications; a Wi-Fi or other interface intended for local short-distance wireless communications, a 4G or 5G interface intended for long-distance wireless communications, and others. These are also schematically shown in the lower left part of fig. 1. If the base unit comprises one or more built-in control network interfaces for controlling some aspects of a building automation system (see block 201 in fig. 2), these would also count as external communications interfaces 413 in the functional description given in fig. 4.

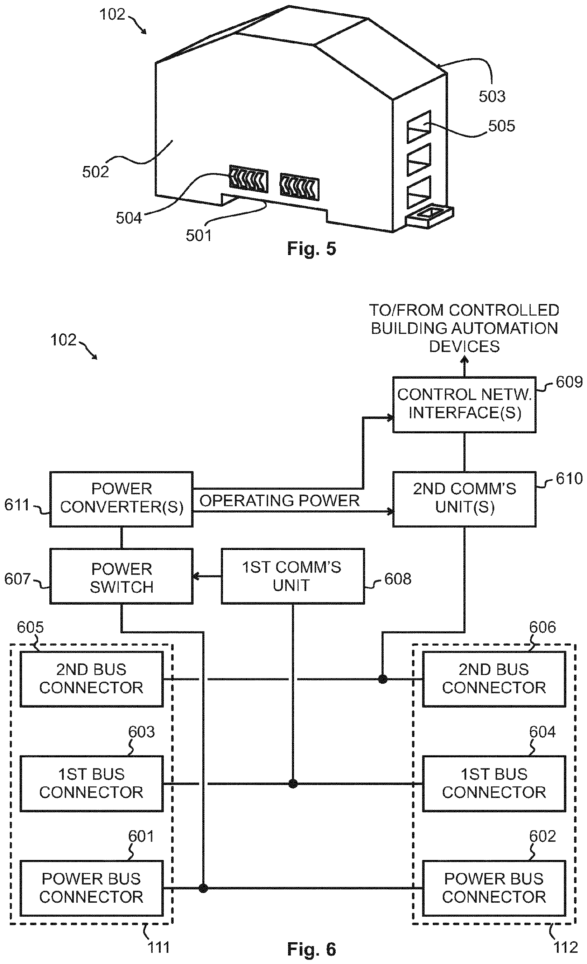

Figs. 5 and 6 illustrate aspects of an exemplary extension unit 102. Since the extension unit 102 is meant to be attached to the common mechanical support of the controller device, it comprises a mechanical interface similar to that of the base unit. According to the embodiment shown in fig. 5 the mechanical interface comprises a DIN rail slot 501 at a bottom surface of the extension unit. The extension unit comprises also what is here called the first interface 111 (see figs. 1 and 6) for receiving either a base unit 101 or another extension unit of the controller device into contact with the extension unit 102. If this particular extension unit is the first in the row of possibly several extension units in the completed controller device, the first interface 111 comes against the base unit. If, however, there are one or several other extension units therebetween, the first interface 111 comes against the most recent other extension unit in the row.

The extension unit 102 comprises what is here called the second interface 112 (see figs. 1 and 6) for receiving (a base unit or) another extension unit into contact with the extension unit 102. In the examples described so far the base unit 101 had an extension unit interface only on one side surface thereof, which means that extension units could be coupled in a row only on one side of the base unit. In such a case, for geometrical reasons, the second interface 112 of any extension unit is only for receiving another extension unit. If, however, the base unit 101 would have similar extension unit interfaces e.g. at two opposite side faces thereof, the controller device could comprise extension units on both sides of the base unit and the second interface 112 of one of the extension units could come against the base unit.

Taken the DIN-rail-attachable form factor of the embodiment of fig. 5, the first interface 111 may comprise a first side surface 502 of the extension unit 102, which first side surface 502 is perpendicular to the bottom surface. Correspondingly the second interface 112 may comprise a second side surface 503, which is perpendicular to the bottom surface and parallel with the first side surface 502.

As parts of the first and second interfaces 111 and 112 the extension unit 102 comprises connectors for the three buses of the controller device. Fig. 6 shows how there is a first power bus connector 601 as a part of the first interface 111, and a second power bus connector 602 as a part of the second interface 112. The first and second power bus connectors 601 and 602 are connected to each other, so that the power bus 107 (see fig. 1) essentially continues across the extension unit 102 from the first interface 111 to the second interface 112. For the first communications bus 108 (see fig. 1) there is a first connector 603 as a part of the first interface 111, and a second connector 604 as a part of the second interface 112. Also these connectors are connected to each other, so that the first communications bus 108 essentially continues across the extension unit 102 from the first interface 111 to the second interface 112. For the second communications bus 109 (see fig. 1) there is a first connector 605 as a part of the first interface 111, and a second connector 606 as a part of the second interface 112. Also these connectors are connected to each other, so that the second communications bus 109 essentially continues across the extension unit 102 from the first interface 111 to the second interface 112.

All connectors 601, 602, 603, 604, 605, and 606 of the extension unit are advantageously located on the respective side surfaces of the extension unit 102. In other words, the first connector 601 of the power bus, first connector 603 of the first communications bus, and first connector 605 of the second communications bus may be located on the first side surface 502. Correspondingly the second connector 602 of the power bus, second connector 604 of the first communications bus, and second connector 606 for the second communications bus may be located on the second side surface 503. This involves the advantage that connections between the connectors of the adjacent units can be made automatically, without having to employ e.g. cables from one unit to another. In an advantageous embodiment at least one of the connectors 601, 602, 603, 604, 605, and 606 is implemented with a set of spring-loaded pieces of conductive material 504 protruding out of the respective side surface 502 or 503.

Fig. 6 shows how the extension unit 102 comprises a controllable power switch 607 that is coupled to the power bus connectors 601 and 602. The controllable power switch 607 is configured to controllably allow or disallow the extension unit 102 to draw electric power from the power bus through one of the power bus connectors 601 and 602. Thus, while the power bus 107 goes essentially through the extension unit 102 from connector 601 to connector 602 in any case, whether or not the actual active parts of the extension unit 102 are operatively coupled to the power bus 107 depends on the conductive state of the power switch 607.

The extension unit 102 comprises a first communications unit 608 that is coupled to the connectors 603 and 604 of the first communications bus. The first communications unit 608 is configured to set up and maintain communications with a base unit of the controller device on the first communications bus through one of the connectors 603 and 604. In the embodiment of fig. 6 the first communications unit 608 is coupled to a control input of the controllable power switch 607 to make the first communications unit 608 control the state of the controllable power switch 607. In other words, based on information that it has exchanged through the first communications bus 108 the first communications unit 608 may set the controllable power switch 607 at least to a conductive state or a non-conductive state. In a slightly more elaborate embodiment the first communications unit 108 might select a level of conductivity of the controllable power switch 607 not only at a minimum or maximum value but also at one or more intermediate values.

As a primary purpose of at least most extension units is to add one or more selected control network interfaces to the controller device, the extension unit 102 shown in fig. 6 comprises a control network interface 609 for setting up and maintaining communications with one or more external devices that belong to a building automation system. In fig. 5 the physical connector(s) for the control network interface (s) 609 may appear for example at one end of the extension unit, as shown with reference designator 505.

The extension unit 102 comprises a second communications unit 610 that is coupled to the connectors 605 and 606 of the second communications bus. The second communications unit 610 is configured to set up and maintain communications between a base unit (to which the extension unit is coupled) and the control network interface(s) 609, so that these communications go through one of the connectors 605 and 606 of the second communications bus.

Operating power to the control network interface (s) and the second communications unit 610 comes advantageously from a power supply 611 comprised in the extension unit 102, to which the operating power comes from the power bus through the controllable switch 607 when the latter is conductive. In other words, the control network interface (s) 609 and the second communications unit 610 can only operate, or at least can only achieve full operability, if the controllable power switch 607 is conductive. To the contrary the first communications unit 608 is capable of drawing its operating power from the first communications bus, or more generally from a source that is independent of the state of conductivity of the controllable power switch 607. This is one reason for selecting e.g. an I2C bus as the first communications bus, because the specifications of the I2C bus allow slave devices on said bus to draw their operating power from the bus. Other alternatives for use as an "independent" power source of the first communications unit 608 might include for example a long-lasting battery and/or a power scavenging circuit that produced the required power from vibrations, temperature differences, ambient light, or other secondary sources.

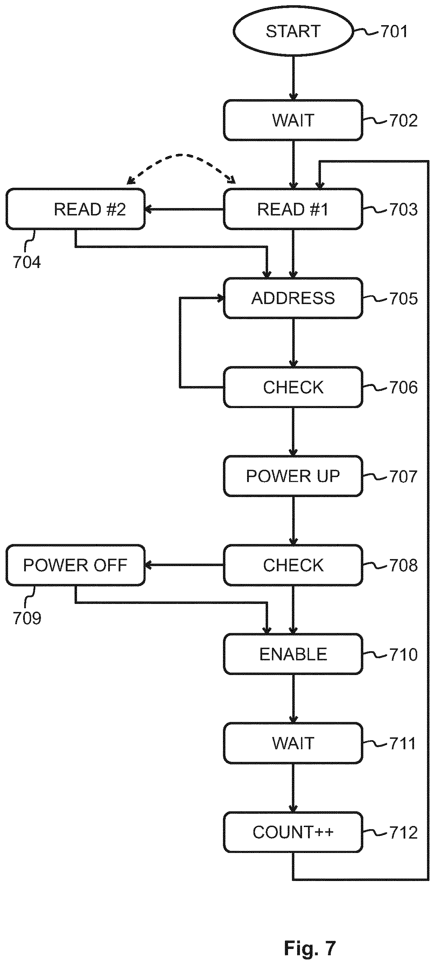

An example of operation of a base unit and an extension unit is described next with reference to the state diagram shown in fig. 7. The state diagram is particularly a representation of how a base unit may operate. This kind of operation may take place for example when an assembled controlled device with a base unit and one or more extension units is first powered up, or when an extension unit is added to a "hot" base unit that has been powered up earlier.

After power-up (step 701) the base unit may wait in state 702 for detecting an extension unit connected thereto. The base unit may detect a connected extension unit through some mechanism known as such, for example by observing a change in the state of one of the buses. The base unit may be configured to respond to the detection of a connected extension unit by interrogating for a device identifier through the first communications bus 108. At this stage the extension unit is in a state in which its controllable power switch 607 (see fig. 6) is non-conductive, with two consequences: i) the extension unit does not draw (any significant amount of) power from the power bus 107, and ii) the base unit cannot communicate with the second communications unit of the extension unit, because the second communications unit does not receive operating power. Thus the interrogating for a device identifier at state 703 means that the base unit would like to read a device identifier stored in the first communications unit of the extension unit.

In fig. 7 it is assumed that there are two memory locations in the first communications unit of the extension unit for added reliability in operation. The base unit tries first, at state 703, to read the device identifier stored in the first memory location. If this does not succeed, for example because a parity check reveals corrupt data, the base unit tries at state 704 to read the device identifier stored in the second memory location. Hopefully the device identifier can be obtained successfully from at least one of the memory locations, after which operation proceeds to state 705. Successfully reading a device identifier from one memory location may also result in storing the successfully read device identifier to the other memory location, as shown by the double-headed arrow between states 703 and 704. In addition or as alternative to a serial number or other device identifier also other data may be read from the extension unit at state 703 or 704, such as a product identifier, last known status, various checksums, and/or the like.

The base unit may be configured to transmit reconfiguration data to a connected extension unit, as represented by addressing at state 705. The reconfiguration data may be transmitted through the first communications bus (again because the first communications bus is the only available way of communications between the base unit and the extension unit at this stage). The reconfiguration data may contain any kinds of data that enables more straightforward operation of the controller device in the continuation. For example, the base unit may want to give each extension unit a new address for continued communications on the communications buses.

State 706 represents generally all kinds of checks that the base unit may perform in order to ensure that any storing of reconfiguration data or other instructions given to the extension unit have given the desired result. For example, the base unit may perform a read operation on the first communications bus using the new address it recently gave to the extension unit. If reading from this new address returns a correct copy of the newest configuration data or other data that the base unit knows should be there appropriately stored in a memory of the connected extension unit, operation may proceed to the next state. Failure in one or more of the checks may cause a return to state 705, in which the reconfiguration data is stored again to the memory of the extension unit.

According to state 707 the base unit is configured to respond to the completion of a predefined exchange of information through the first communications bus by instructing the extension unit to power up. This means that extension unit with which said predefined exchange of information took place. In other words, proceeding through states 703, (possibly 704,) 705, and 706 has convinced the base unit that the connected extension unit should be capable of operating as a part of the modular controller device as intended. Therefore the base unit proceeds to allow the extension unit to power up, as shown by state 707.

In practice the base unit uses the first communications bus to instruct the extension unit to make its controllable power switch 607 (see fig. 6) conductive. At state 708 the base unit monitors an increase of power consumption on the power bus 107, which increase results from the instructed powering up of the extension unit. States 708 and 709 illustrate how the base unit is configured to instruct the extension unit to either continue operating (as in state 708) or power down (as in state 709), depending on whether the monitoring showed the increase in power consumption to be within (as in state 708) or out of (as in state 709) a predefined allowable power range respectively.

For performing the checking and instructing at states 708 and 709, the base unit may apply some known basic allowable power range. For example, an instruction stored in a memory of the base unit may dictate that no extension unit is allowed to draw more than a predefined maximum amount of power from the power bus. Additionally or alternatively there may be type-specific limits for extension units, for example so that there is one predefined maximum amount of power that any DALI extension unit is allowed to draw, and some other predefined maximum amount of power that any RS485 extension unit is allowed to draw. A yet further alternative is that the limit(s) of an allowable power range are stored as part of (or are otherwise derivable from) the configuration data of each extension unit, so that even dedicated limits per each particular extension unit specimen could be applied.

If everything proceeded smoothly, the base unit may be configured to communicate with the extension unit through the second communications bus after instructing the extension unit to continue operating. In other words, after the controllable power switch in the extension unit was made conductive in state 707 and the resulting increased draw of power from the power bus was found to be within the allowable range at state 708, the second communications unit in the extension unit is ready to convey communications between the base unit and the appropriate control network interface(s) in the extension unit.

The enabling in state 710 means that it is time to enable a subsequent extension unit in the modular controller device for checking, configuring, and eventually powering up. In order to ensure that the base unit performs these operations with only one extension unit at a time, it is advantageous to equip the extension units with some kind of a mechanism through which they can "pass the token" to the next extension unit in the row. Known mechanisms for such "passing of a token" exist, and they may involve e.g. changing the potential of a particular signal line, enabling some key circuit in the next extension unit, or the like. Providing a mechanism for "passing the token" is not mandatory, if the use of the first communications bus involves some inherent conflict resolution protocol that ensures that the base unit is communicating with exactly one extension unit at a time. Another case in which no such mechanism is needed is the one in which the base unit is up and running when the process of adding extension units starts, and only one extension unit is added at a time, building the row of connected extension units one by one with the base unit running all the time.

In fig. 7 it is assumed that after enabling the detection of a subsequent extension unit at state 710 the base unit goes into a wait state 711, from which it wakes up when the next connected extension unit is detected. Increasing the extension unit count at state 712 means making the base unit aware that it is now dealing with the subsequent extension unit, and not with the one that it already configured and checked. After increasing the count at state 712 a return to state 703 occurs, and the newly connected extension unit is checked and configured using the same procedure as described above.

To summarize, the method described above for operating a controller device of a building automation system comprises detecting the coupling of an extension unit to a base unit of the controller device. Such detecting is what causes the method to proceed from states 702 or 711 to the next state. The method comprises setting up communications between the base unit and the extension unit through a first communications bus. As a response to the completion of a predefined exchange of information through the first communications bus, i.e. when the checking at state 706 passed successfully, the method comprises instructing the extension unit to power up. The method comprises monitoring an increase of power consumption on a power bus resulting from the instructed powering up of the extension unit. Finally the method comprises instructing the extension unit to either continue operating or power down, depending on whether said monitoring at state 708 showed said increase of power consumption to be within or out of a predefined allowable power range respectively.

Preferably the method comprises also making the base unit communicate with the extension unit through a second communications bus, different from said first communications bus, after instructing the extension unit to continue operating.

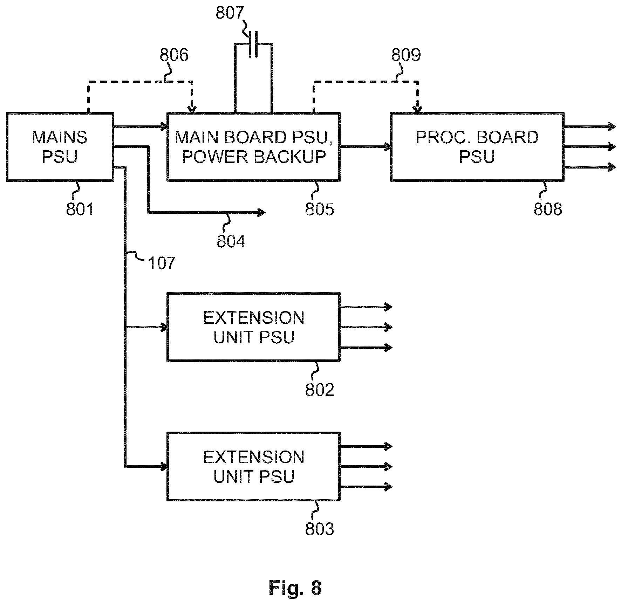

Fig. 8 illustrates an example of some advantageous features of distributing electric power within the controller device. The mains power supply unit 801 is preferably located in the base unit, and constitutes a part of what is shown as 207 in fig. 2 and 405 in fig. 4. One of its outputs is the electric power delivered to the power supply units 802 and 803 of the extension units through the power bus 107. Another output 804 from the mains power supply unit 801 can deliver operating power to the built-in control network interfaces 201 (see fig. 2) of the base unit, if any are present. A further power supply unit 805 may be provided on a main circuit board of the base unit, to provide operating power for the internal parts of the base unit.

In fig. 8 the base unit is additionally equipped for controlled shutdown in the case of a mains voltage failure. For this purpose there is a signaling connection 806 from the mains power supply unit 801 to the further power supply unit 805. Through this signaling connection the further power supply unit 805 may become aware that mains power has failed. The further power supply unit 805 has a sufficiently large capacitor 807 or other temporary source of electric energy available, so that it can temporarily continue operating even if it does not receive power any more from the mains power supply unit 801.

One of the parts of the base unit that receives operating power from the further power supply unit 805 is the main processor unit which together with some supplementary circuits may constitute a processor board with a local power supply unit 808 of its own. A further signaling connection 809 enables making also the local power supply unit 808 aware of the imminent shutdown caused by mains power failure, so that it may make the processor execute a controlled shutdown procedure, powered by the reserve power taken from the capacitor 807 or other temporary source of electric energy.

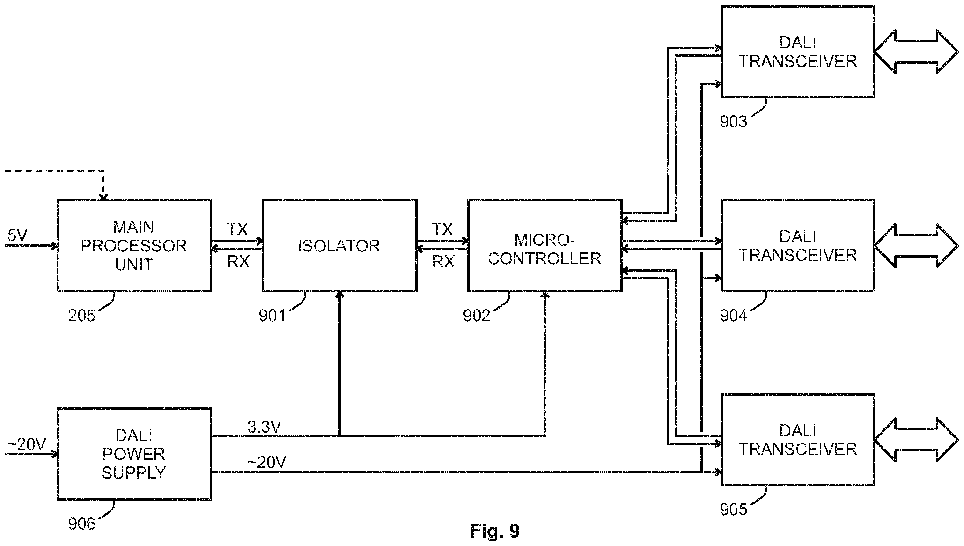

Fig. 9 illustrates an example of how communications and the distribution of electric power may be arranged regarding the main processor unit 205 and built-in control network interfaces 903, 904, and 905 in the base unit. The base unit 205 receives its operating power, at the voltage level of 5V in fig. 9, from a power supply unit that is not shown in fig. 9. There may be also signaling connections, for example for making the main processor unit 205 aware of an imminent controlled shutdown. An isolator 901 is provided between the main processor unit 205 and a microcontroller 902 that in the configuration of fig. 9 takes the role of one of the drivers 414 in fig. 4. The actual control network interfaces are the three DALI transceivers 903, 904, and 905 in fig. 9. A separate DALI power supply 906 is configured to deliver the relatively high DC voltage of approximately 20V to the

DALI transceivers 903, 904, and 905. In this exemplary embodiment the DALI power supply 906 also provides the operating power, at a much lower voltage level (3.3V in fig. 9) to the isolator 901 and the microcontroller 902.

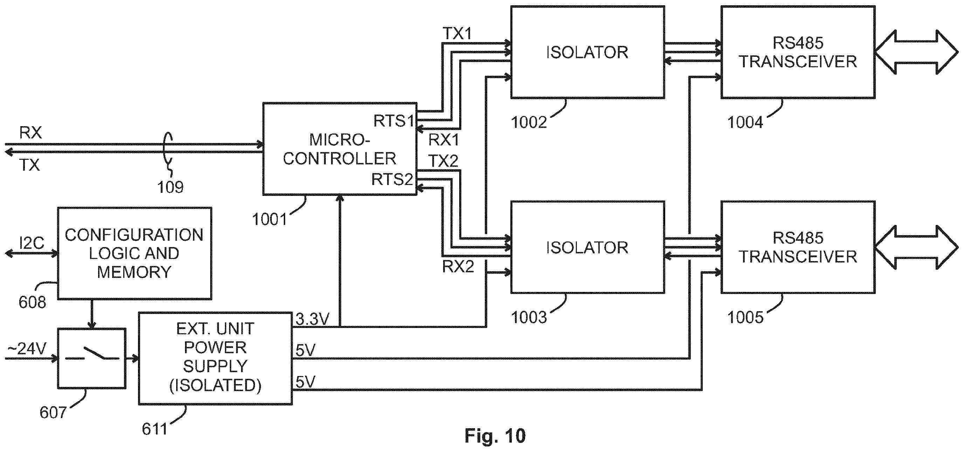

Fig. 10 illustrates an example of how communications and the distribution of electric power may be arranged regarding certain parts of an extension unit, the role of which is to provide two RS485 type control network interfaces. A microcontroller 1001 implements the communications with the base unit on the second communications bus 109, if powered up by the power supply unit 611 of the extension unit. The state of conductivity of the controllable power switch 607 determines whether the power supply unit 611 receives operating power from the power bus; the controllable power switch 607 is controlled by the first communications unit 608 that in fig. 10 is labelled as comprising configuration logic and memory. Isolators 1002 and 1003 provide isolation between the microcontroller 1001 on one hand and the two parallel RS485 transceivers 1004 and 1005 on the other hand. Also the power supply unit 611 of the extension unit implements isolation between the operating powers (at the level of 5V) it provides to the two parallel RS485 transceivers 1004 and 1005.

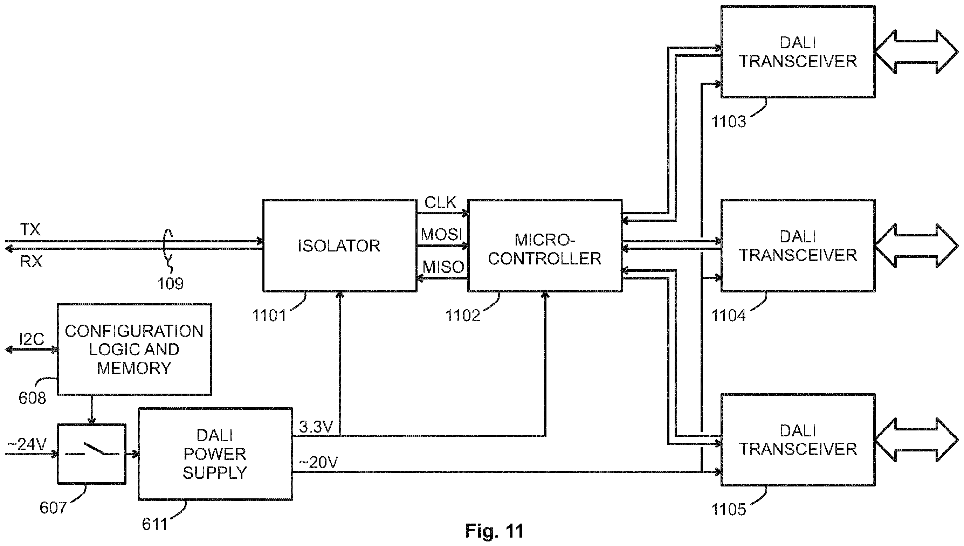

Fig. 11 illustrates an example of how communications and the distribution of electric power may be arranged regarding certain parts of an extension unit, the role of which is to provide three DALI type control network interfaces. The implementation resembles that of the extension unit of fig. 10, with the difference that there is an isolator 1101 separating the microcontroller 1102 from the second communications bus 109, and that the control network interfaces are implemented with three parallel DALI transceivers 1103, 1104, and 1105.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. Base unit (101) for a controller device of a building automation system, the base unit comprising:
- a mechanical interface (302) for attaching to a common mechanical support (105, 301) of the controller device,
- an extension unit interface (110, 401) for receiving an extension unit (102) of the controller device into contact with the base unit (101),
- as parts of said extension unit interface (110, 401) :
- a power bus connector (402),
- a first communications bus connector (403), and
- a second communications bus connector (404),
- a power supply (207, 405) coupled to said power bus connector (402) and configured to deliver electric power to one or more extension units (102, 103, 104) on a power bus (107) through said power bus connector (402),
- a first communications bus controller (406) coupled to said first communications bus connector (403) and configured to set up and maintain communications with one or more extension units (102, 103, 104) on a first communications bus (108) through said first communications bus connector (403), and
- a second communications bus controller (407) coupled to said second communications bus connector (404) and configured to set up and maintain communications with one or more extension units (102, 103, 104) on a second communications bus (109) through said second communications bus connector (404).

2. A base unit according to claim 1, wherein:
- said mechanical interface comprises a DIN rail slot (302) at a bottom surface of the base unit (101),
- said extension unit interface comprises a side surface (303) perpendicular to said bottom surface, and
- said power bus connector (402), first communications bus connector (403), and second communications bus connector (404) are located on said side surface (303) .

3. A base unit according to claim 2, wherein at least one of said power bus connector (402), first communications bus connector (403), and second communications bus connector (404) is implemented with a set of spring-loaded pieces of conductive material (304) protruding out of said side surface (303).

4. A base unit according to any of the preceding claims, wherein the base unit is configured to respond to a detection of a connected extension unit (102, 103, 104) by interrogating (703, 704) for a device identifier through said first communications bus (108) .

5. A base unit according to any of the preceding claims, wherein the base unit is configured to transmit (705) reconfiguration data to a connected extension unit (102, 103, 104), said reconfiguration data being transmitted through said first communications bus (108).

6. A base unit according to any of the preceding claims, wherein the base unit is configured to read out (706) configuration data from a connected extension unit (102, 103, 104), said configuration data being read out through said first communications bus (108) .

7. A base unit according to any of the preceding claims, wherein the base unit is configured to:
- respond to the completion of a predefined exchange of information through said first communications bus (108) by instructing (707) the extension unit (102, 103, 104) with which said predefined exchange of information took place to power up,
- monitor (708) an increase of power consumption on said power bus (107) resulting from the instructed powering up of the extension unit (102, 103, 104), and
- instruct the extension unit (102, 103, 104) to either continue operating (708) or power down (709), depending on whether said monitoring showed said increase of power consumption to be within or out of a predefined allowable power range respectively.

8. A base unit according to claim 7, wherein said base unit is configured to communicate with the extension unit (102, 103, 104) through the second communications bus (109) after instructing the extension unit to continue operating (708).

9. Extension unit (102, 103, 104) for a controller device of a building automation system, the extension unit comprising:
- a mechanical interface (501) for attaching to a common mechanical support (105, 301) of the controller device,
- a first interface (111) for receiving a base unit (101) or another extension unit of the controller device into contact with the extension unit,
- a second interface (112) for receiving a base unit or another extension unit of the controller device into contact with the extension unit,
- as parts of said first (111) and second (112) interfaces respectively:
- first (601) and second (602) power bus connectors, connected to each other
- first (603) and second (604) first communications bus connectors, connected to each other, and
- first (605) and second (606) second communications bus connectors, connected to each other,
- a controllable power switch (607) coupled to said power bus connectors (601, 602) and configured to controllably allow or disallow the extension unit to draw electric power from a power bus through one of said power bus connectors (601, 602),
- a first communications unit (608) coupled to said first communications bus connectors (603, 604), configured to set up and maintain communications with a base unit on a first communications bus through one of said first communications bus connectors (603, 604),
- a control network interface (609) for setting up and maintaining communications with external devices of said building automation system, and
- a second communications unit (610) coupled to said second communications bus connectors (605, 606) and configured to set up and maintain communications between a base unit and said control network interface on a second communications bus through one of said second communications bus connectors (605, 606).

10. An extension unit according to claim 9, wherein:
- said mechanical interface comprises a DIN rail slot (501) at a bottom surface of the extension unit,
- said first interface comprises a first side surface (502) perpendicular to said bottom surface,
- said second interface comprises a second side surface (503) perpendicular to said bottom surface and parallel with the first side surface (502),
- said first connector (601) of the power bus, first connector (603) of the first communications bus, and first connector (605) of the second communications bus are located on said first side surface (502), and
- said second connector (602) of the power bus, second connector (604) of the first communications bus, and second connector (606) for the second communications bus are located on said second side surface (503).

11. An extension unit according to claim 10, wherein at least one of said first and second power bus connectors, first and second first communications bus connectors, and first and second second communications bus connectors is implemented with a set of spring-loaded pieces of conductive material (504) protruding out of the respective side surface (502, 503).

12. An extension unit according to any of claims 9 to 11, wherein said first communications unit (608) is coupled to a control input of said controllable power switch (607) to make the first communications unit (608) control the state of the controllable power switch (607).

13. A controller device for a building automation system, comprising at least one base unit (101) according to any of claims 1 to 8 and at least one extension unit (102, 103, 104) according to any of claims 9 to 12.

14. Method for operating a controller device of a building automation system, comprising:
- detecting the coupling of an extension unit to a base unit of the controller device,
- setting up communications (703, 702, 705, 706) between the base unit and the extension unit through a first communications bus (108),
- as a response to the completion of a predefined exchange of information through said first communications bus, instructing (707) the extension unit with which said predefined exchange of information took place to power up,
- monitoring (708) an increase of power consumption on a power bus (107) resulting from the instructed powering up of the extension unit, and
- instructing the extension unit to either continue operating (708) or power down (709), depending on whether said monitoring (708) showed said increase of power consumption to be within or out of a predefined allowable power range respectively.

15. A method according to claim 14, comprising:
- making the base unit communicate with the extension unit through a second communications bus, different from said first communications bus, after instructing the extension unit to continue operating (708).
